# EUROPÄISCHE PATENTSCHRIFT

(11) **EP 1 384 122 B1**
(45) Veröffentlichungstag und Bekanntmachung des Hinweises auf die Patenterteilung: **25.05.2011**
(21) Anmeldenummer: 02722009.4
(22) Anmeldetag: 14.03.2002
(51) Int. Cl.: G05B 19/042, G05B 19/048

(54) **VERFAHREN ZUR ANSTEUERUNG EINER KOMPONENTE EINES VERTEILTEN SICHERHEITSRELEVANTEN SYSTEMS**
METHOD FOR CONTROLLING A COMPONENT OF A DISTRIBUTED SAFETY-RELEVANT SYSTEM
PROCEDE DE COMMANDE D'UN COMPOSANT D'UN SYSTEME DE SECURITE DISTRIBUE

(30) Priorität: 15.03.2001 DE 10112914
(43) Veröffentlichungstag der Anmeldung: 28.01.2004
(73) Patentinhaber: ROBERT BOSCH GMBH, 70442 Stuttgart (DE)
(72) Erfinder: FUEHRER, Thomas, 70839 Gerlingen (DE); MUELLER, Bernd, 71229 Leonberg (DE)
(86) Internationale Anmeldenummer: PCT/DE2002/000914
(87) Internationale Veröffentlichungsnummer: WO 2002/075463

(56) Entgegenhaltungen:
- DE-A- 4 438 714
- DE-A- 19 826 131
- DE-A- 19 933 086
- DE-A- 19 937 159

## Beschreibung

### Stand der Technik

Die vorliegende Erfindung betrifft ein Verfahren zur Ansteuerung einer Komponente eines verteilten sicherheitsrelevanten Systems, insbesondere einer Komponente eines X-by-Wire-Systems in einem Kraftfahrzeug. Die Komponente wird von einem der Komponente zugeordneten Prozessrechner angesteuert, der über einen Kommunikationscontroller an ein Kommunikationssystem angeschlossen ist. Es ist eine von dem Prozessrechner unabhängige Überwachungseinheit vorgesehen, durch die der Prozessrechner überwacht wird.

Die Erfindung betrifft außerdem einen Kommunikationscontroller zum Anschluss eines Prozessrechners an ein Kommunikationssystem, wobei der Prozessrechner zur Ansteuerung einer Komponente eines verteilten, sicherheitsrelevanten Systems, insbesondere einer Komponente eines X-by-Wire-Systems in einem Kraftfahrzeug dient, und auf dem Kommunikationscontroller zur Realisierung einer Datenübertragung zwischen dem Prozessrechner und dem Kommunikationssystem ein Kommunikationsprotokoll abläuft.

Ein Verfahren der eingangs genannten Art ist bspw. aus der DE 198 26 131 A1 bekannt. In dieser Druckschrift ist ein verteiltes sicherheitsrelevantes System als ein elektrisches Bremssystem eines Kraftfahrzeugs beschrieben. Komponenten dieses Systems sind als die Bremsen des Kraftfahrzeugs bzw. genauer gesagt als Aktoren zur Ansteuerung der Bremsen ausgebildet. Ein solches System ist in hohem Maße sicherheitsrelevant, da eine fehlerhafte Ansteuerung der Komponenten, insbesondere ein fehlerhaftes Betätigen der Bremsen, zu einem nicht vorhersehbaren Sicherheitsrisiko führen kann. Aus diesem Grund muss eine fehlerhafte Ansteuerung der Komponenten mit Sicherheit ausgeschlossen werden.

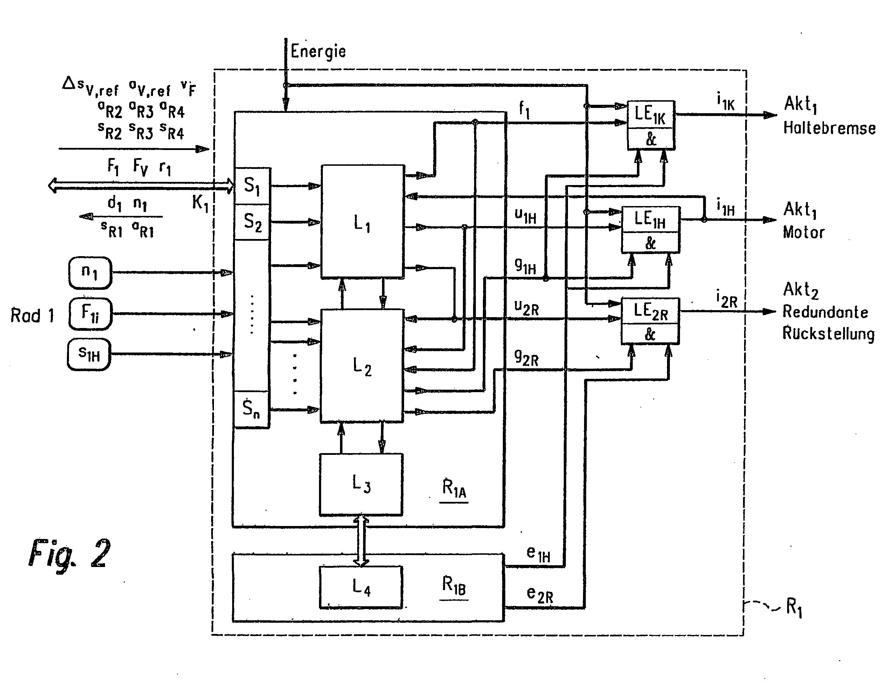

Wesentliche Merkmale des bekannten Bremssystems sind ein Pedalmodul zur zentralen Fahrerwunscherfassung, vier Radmodule zur radindividuellen Regelung der Bremsaktuatoren und ein Verarbeitungsmodul zur Berechnung übergeordneter Bremsfunktionen. Die Kommunikation der einzelnen Module untereinander kann durch ein Kommunikationssystem erfolgen. In Figur 2 der vorliegenden Patentanmeldung ist die interne Struktur eines Radmoduls mit verschiedenen logischen Ebenen beispielhaft dargestellt. Die logische Ebene L1 umfasst dabei mindestens die Berechnung der Steuer- und Regelfunktionen für die Radbremsen, während die logischen Ebenen L2 bis L4 verschiedene Funktionen zur Rechnerüberwachung und Funktionsüberprüfung von L1 beinhalten.

Die Ansteuerung der Bremsen, bzw. der Elektromotoren zur Betätigung der Bremsbacken, umfasst für jedes Radmodul gleichermaßen die nachfolgenden Schritte:
a) Ermitteln mindestens eines Ansteuersignals (f_1) für die Bremse durch ein erstes Mikrorechnersystem (R_1A) in Abhängigkeit von mindestens einem Eingangssignal (a_R2, a_R3, a_R4; a_V,ref; s_R2, s_R3, s_R4; Δs_V,ref; v_F; n_1; d_1; F_li; a_R1; s_R1). Die Eingangssignale werden dem Mikrorechnersystem (R_1A) über ein Kommunikationssystem (K_1), bspw. ein Bussystem, zur Verfügung gestellt.
b) Ermitteln mindestens eines logischen Ansteuersignals (e_1H). Das logische Ansteuersignal (e_1H) wird zumindest teilweise von einer von dem ersten Mikrorechnersystem (R_1A) unabhängigen Überwachungseinheit (R_1B) in Abhängigkeit von dem mindestens einen Eingangssignal ermittelt.
c) Vergleichen des mindestens einen Ansteuersignals (f_1) mit dem mindestens einen logischen Ansteuersignal (e_1H) in einer Leistungselektronik (LE_1K).
d) Ermitteln mindestens eines Freigabesignals (innerhalb der Leistungselektroniken LE) in Abhängigkeit von dem Ergebnis des Vergleichs des Ansteuersignals (f_1) und des logischen Ansteuersignals (e_1H); und
e) Weiterleiten des mindestens einen Ansteuersignals (f_1) oder eines von dem Ansteuersignal (f_1) abhängigen Signals (i_1K) an die Bremse, bzw. an einen Aktuator Akt_1 für die Bremsbacken, falls das mindestens eine Freigabesignal einen vorgebbaren Wert aufweist.

Die Überwachungseinheit (R_1B) dient insbesondere zur Erkennung systematischer (sog. common mode) Fehler. Ein Beispiel für solche Fehler sind Fehler in der Spannungsversorgung. Bei dem bekannten Bremssystem ist die Überwachungseinheit (R_1B) als ein selbständiges Mikrorechnersystem ausgebildet. Alternativ kann die Überwachungseinheit (R_1B) jedoch auch als ein Hardwarebaustein ohne eigenen Prozessor ausgebildet sein, der jedoch konkrete logische Funktionen oder, falls er ein Register aufweist, sogar Schaltfunktionen ausführen kann. Ein Beispiel für einen solchen Hardwarebaustein ist bspw. ein ASIC (Applied Specific Integrated Circuit), ein FPGA (Field-Programmable Gate Array) oder eine Überwachungsschaltung (sog. Watch-Dog).

Nachteilig beim Stand der Technik ist es, dass die logische Ebene L4 stets in einem gesonderten Bauteil realisiert ist, das - bspw. in Radmodulen eines elektrischen Bremssystems - innerhalb des verteilten sicherheitsrelevanten Systems zudem mehrfach vorgesehen sein muss.

Der vorliegenden Erfindung liegt die Aufgabe zugrunde, den Aufbau eines verteilten sicherheitsrelevanten Systems zu vereinfachen und gleichzeitig die erzielbare Sicherheit bei der Freigabe der Komponenten zumindest beizubehalten.

Zur Lösung dieser Aufgabe schlägt die Erfindung ausgehend von dem Verfahren der eingangs genannten Art vor, dass die Aufgaben der Überwachungseinheit durch den Kommunikationscontroller erfüllt werden.

### Vorteile der Erfindung

Erfindungsgemäß wird also vorgeschlagen, auf eine gesonderte Überwachungseinheit zu verzichten und die Aufgaben der Überwachungseinheit statt dessen von solchen Einheiten des verteilten sicherheitsrelevanten Systems ausführen zu lassen, die sowieso in dem System vorgesehen sind. Diese Einheiten müssen über eine eigene Intelligenz verfügen, um zumindest in beschränktem Umfang eigene Berechnungen anstellen zu können. Als eine solche SystemEinheit, welche erfindungsgemäß die Aufgaben der Überwachungseinheit übernehmen kann, eignet sich insbesondere der Kommunikationscontroller, über welchen der Prozessrechner an das Kommunikationssystem angeschlossen ist.

Der Einsatz von Kommunikationssystemen in Kraftfahrzeugen ist inzwischen bei nahezu allen Herstellern zum Standard geworden. Über die Kommunikationssysteme können Daten bspw. nach dem CAN (Controller Area Network)-, TTCAN (Time Triggered CAN)-, TTP/C (Time Triggered Protocol for Class C nach SAE)- oder nach dem FlexRay-Protokoll übertragen werden. Die Protokolle verfügen in der Regel über eine sogenannte globale Zeit, die eine systemweit gültige Zeitbasis darstellt. Sie spielt für die Zeitsteuerung in der Kommunikation (z.B. bei zeitgesteuerten Kommunikationsprotokollen) und in der Applikation (z.B. bei zeitgesteuerten Betriebssytemen), aber auch für Diagnosefunktionen und Fehlererkennung bzw. Fehlerbehandlung eine wichtige Rolle. Das gedeutet also, dass jeder Kommunikationscontroller eines solchen Systems eine eigene Uhr (Quarz) besitzt, die über den Mechanismus der globalen Zeit sogar mit allen anderen Uhren in dem System synchronisiert ist. Aufgrund dieser Möglichkeiten, kann der Kommunikationscontroller problemlos für die Überwachung des Mikrorechners eingesetzt werden.

Gemäß einer vorteilhaften Weiterbildung der vorliegenden Erfindung wird vorgeschlagen, dass dem Kommunikationscontroller eine Liste mit Fragen zur Verfügung steht, die dem zu überwachenden Prozessrechner zu vorgebbaren Zeitpunkten gestellt werden, wobei der Prozessrechner dem Kommunikationscontroller eine Antwort gibt, die von diesem dann ausgewertet wird. Diese Art der Überwachung eines Prozessrechners wird auch als Frage-Antwort-Kommunikation bezeichnet. Die Liste ist vorzugsweise in einem Speicherelement, insbesondere einem Random-Access-Memory, einem Read-Only-Memory oder einem Flash-Memory, abgespeichert. Die Fragen sind bspw. einfache Werte mit mehreren Bits, die von dem Prozessrechner auf eine vorgebbare Weise bearbeitet werden. Die Bearbeitung kann von einer einfachen Invertierung der Frage bis hin zu einer komplexen Berechnung inklusive Speichertest reichen. Das Ergebnis der Bearbeitung ist die Antwort des Prozessrechners auf die gestellte Frage.

Gemäß einer vorteilhaften Ausführungsform der vorliegenden Erfindung wird vorgeschlagen, dass die Antwort dahingehend überprüft wird, ob sie innerhalb einer vorgebbaren Zeitdauer erfolgte. Sobald dem Prozessrechner eine Frage zur Verfügung gestellt wird, wird ein Zeitzähler gestartet. Erfolgt die Antwort durch den Prozessrechner nicht innerhalb eines durch den Startzeitpunkt und die Zeitdauer definierten Zeitfensters, wird auf einen Fehler des Prozessrechners geschlossen, und es werden geeignete Gegenmaßnahmen zur Vermeidung einer sicherheitsrelevanten Situation eingeleitet.

Alternativ oder zusätzlich wird vorgeschlagen, dass die Antwort dahingehend überprüft wird, ob sie richtig ist. Zu diesem Zweck wird überprüft, ob die Antwort in einer Liste als richtige Antwort auf die gestellte Frage eingetragen ist. Die richtigen Antworten können zusammen mit den entsprechenden Fragen in einem Speicherelement, insbesondere einem Random-Access-Memory, einem Read-Only-Memory oder einem Flash-Memory, des Kommunikationscontrollers abgespeichert sein Gemäß einer vorteilhaften Weiterbildung der vorliegenden Erfindung werden dem Prozessrechner die Fragen von dem Kommunikationscontroller periodisch gestellt. Alternativ können die Fragen auch nach einem bestimmten zeitlichen Muster oder zufällig gestellt werden.

Als geeignete Gegenmaßnahme bei einer falschen Antwort und/oder einer nicht innerhalb einer vorgebbaren Zeitdauer erfolgten Antwort, kann der Kommunikationscontroller gemäß einer bevorzugten Ausführungsform der Erfindung die Abschaltung des Prozessrechners übernehmen. Alternativ oder zusätzlich kann der Kommunikationscontroller die Abschaltung der anzusteuernden Komponente übernehmen.

Als eine weitere Lösung der Aufgabe der vorliegenden Erfindung wird ausgehend von dem Kommunikationscontroller der eingangs genannten Art vorgeschlagen, dass das Kommunikationsprotokoll um Mechanismen ergänzt ist, die es dem Kommunikationscontroller ermöglichen, den Prozessrechner zu überwachen. Diese zu ergänzenden Mechanismen betreffen insbesondere das (periodische) Stellen der Fragen, das Setzen eines Zeitzählers für das zu überwachende Zeitfenster, die Überwachung des Zeitfensters und die Überprüfung der Antwort des Prozessrechners.

Gemäß einer vorteilhaften Weiterbildung der Erfindung wird insbesondere vorgeschlagen, dass das Kommunikationsprotokoll um Mechanismen zur Ausführung des erfindungsgemäßen Verfahrens ergänzt ist.

Schließlich wird vorgeschlagen, dass der Kommunikationscontroller ein Speicherelement, insbesondere ein Random-Access-Memory, ein Read-Only-Memory oder ein Flash-Memory, aufweist, auf dem Fragen für den Prozessrechner und richtige Antworten für eine Frage-Antwort-Kommunikation mit dem Prozessrechner abgespeichert sind.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein verteiltes sicherheitsrelevantes System im Ausschnitt zur Realisierung eines erfindungsgemäßen Verfahrens gemäß einer bevorzugten Ausführungsform;
- Figur 2: ein aus dem Stand der Technik bekanntes Ansteuermodul eines verteilten sicherheitsrelevanten Systems;
- Figur 3: ein Ablaufdiagramm eines erfindungsgemäßen Verfahrens gemäß einer bevorzugten Ausführungsform; und
- Figur 4: einen Ausschnitt des Ablaufdiagramms aus Figur 3 betreffend eine Frage-Antwort-Kommunikation zwischen einem Kommunikationscontroller und einem Prozessrechner.

### Beschreibung der Ausführungsbeispiele

Das erfindungsgemäße Verfahren wird nachfolgend anhand eines elektrischen Bremssystems näher erläutert. Die vorliegende Erfindung ist aber nicht auf elektrische Bremssysteme beschränkt, sondern vielmehr für beliebige verteilte sicherheitsrelevante Systeme einsetzbar, bei denen Systemkomponenten über Prozessrechner angesteuert werden. Die vorliegende Erfindung erlaubt eine sichere Freigabe der Komponenten ohne den Einsatz zusätzlicher Überwachungseinheiten zur Überwachung der Prozessrechner. Die Aufgaben der Überwachungseinheiten werden vielmehr von Einheiten des sicherheitsrelevanten Systems übernommen, die sowieso in dem System vorhanden sind, insbesondere von Kommunikationscontrollern, über welche die Prozessrechner an ein Kommunikationssystem angeschlossen sind.

Das Bremssystem umfasst für jedes zu bremsende Fahrzeugrad ein Radmodul R_1, R m. Jedes Radmodul R_1, R_m umfasst ein Mikrorechnersystem P_1, P_m und eine Freigabeschaltung FS_1, FS_m. Die Mikrorechnersysteme P_1, P_m umfassen jeweils einen Prozessrechner Pro_1, Pro_m und einen intelligenten Kommunikationscontroller S_1, S_m. Der Prozessrechner Pro_1, Pro_m und der Kommunikationscontroller S_1, S_m eines Mikrorechnersystems P_1, P_m können auf einem Halbleiterbaustein (sog. Chip) zusammengefasst sein; sie sind jedoch stets als voneinander unabhängige, gesonderte Einheiten ausgebildet.. Jedes Radmodul R_1, R_m ist über einen Kommunikationscontroller S_1, S_m an einen physikalischen Datenbus K_1 angeschlossen. Über den Datenbus werden Daten bspw. nach dem TTCAN-, TTP/C- oder FlexRay-Protokoll übertragen. Die Radmodule R_1, R_m steuern jeweils eine Aktorik Akt_1, Akt_m an, die bspw. einen oder mehreren Elektromotoren zur Betätigung oder zum Lösen der Radbremsen umfasst.

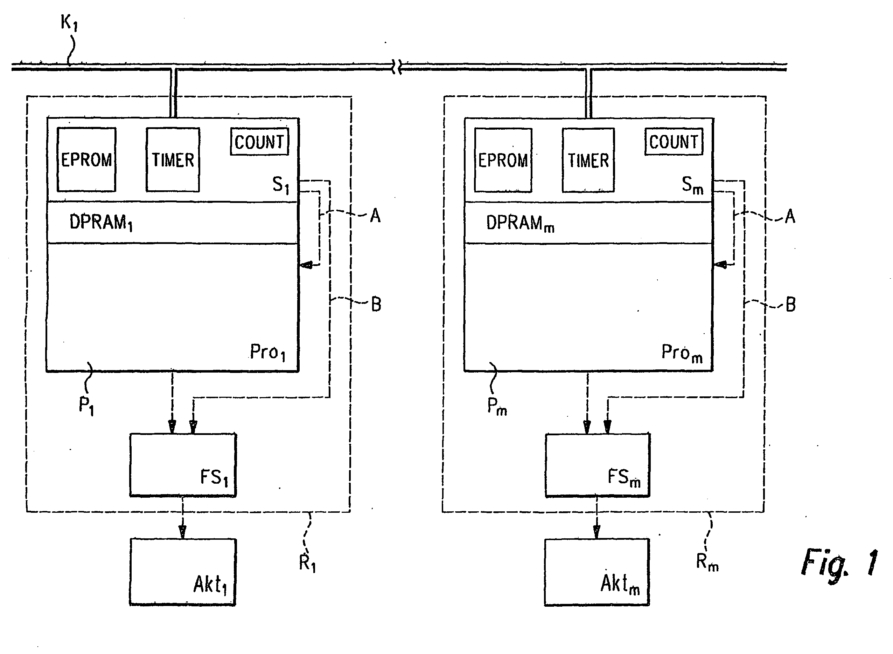

Das aus dem Stand der Technik (vgl. Fig. 2) bekannte Überwachungs-Konzept zur Überprüfung des Prozessrechners (Pro_1) durch eine sog. Frage-Antwort-Kommunikation wird durch das in Fig. 1 dargestellte erfindungsgemäße Prozessrechner-Kommunikationscontroller-Konzept ersetzt. Dabei übernimmt der Kommunikationscontroller S-1 die Aufgabe der Überwachungseinheit R_1B aus dem Stand der Technik und stellt periodisch Fragen an den Prozessrechner Pro_1, um innerhalb eines vorgebbaren Zeitfensters die richtige Antwort zu erhalten. Für den Fall, dass das Zeitfenster nicht eingehalten wird oder nicht die richtige Antwort auf die Frage eintrifft, übernimmt der Kommunikationscontroller S_1 die Abschaltung des Prozessrechners Pro 1 (Signal A) und/oder der angeschlossenen Komponente Akt_1 über die Freigabeschaltung FS_1 (Signal B).

Zur Realisierung des erfindungsgemäßen Konzepts muss der Kommunikationscontroller S_1 lediglich um eine Liste der Fragen und Antworten ergänzt werden. Das Kommunikationsprotokoll des Kommunikationscontrollers S_1 wird um Mechanismen ergänzt, die das periodische Abfragen, das Setzen der entsprechenden Timer für das Zeitfenster, die Überwachung dieses Zeitfensters und die Überprüfung der Antwort ermöglichen. Schließlich weist der Kommunikationscontroller S_1 einen Pin (Signalausgang A) zur Freigabe des Prozessrechners Pro_1 und einen Pin (Signalausgang B) zur Freigabe der Freigabeschaltung FS_1. Diese Pins werden von dem Kommunikationscontroller S_1 bedient.

Der Kommunikationscontroller S_1 führt eine Frage-Antwort-Kommunikation mit dem Prozessrechner Pro_1 aus, die im normalen Protokollablauf (eigentliches Senden und Empfangen von Nachrichten, Nachrichtenbestätigung, eventuell Membership-Service und globale Zeit) eingebaut ist. Daraus ergibt sich eine geringe Mehrbelastung des Kommunikationscontrollers S_1, aber eine bedeutende Verbesserung bei der Nutzung vorhandener Einheiten innerhalb eines verteilten sicherheitsrelevanten Systems. Des Weiteren stellt der Kommunikationscontroller S_1 Software- und Hardware-Schnittstellen zur Verfügung, um den Anschluss an die Freigabeschaltung FS_1 bzw. an einen geeigneten Pin des Prozessrechners Pro-1 zu ermöglichen. Die Freigabeschaltung FS_1 wird also einerseits von dem Prozessrechner Pro_1 und andererseits von dem Kommunikationscontroller S_ bedient. Außerdem kann auch der Prozessrechner Pro_1 selbst mit dem Kommunikationscontroller S_1 gekoppelt werden, so dass der Prozessrechner Pro_1 selbst abgeschaltet werden kann, z.B. durch Kopplung an eine Reset-Leitung des Prozessrechners Pro_1.

Die Realisierung des erfindungsgemäßen Prozessrechner-Kommunikationscontroller-Konzepts zur Durchführung der Frage-Antwort-Kommunikation ist mit jedem Steuergerät möglich, das mit einem Kommunikationscontroller ausgestattet ist, der eine selbständige und unabhängige Uhr aufweist. Im Idealfall ist diese Uhr sogar über einen Uhrensynchronisations-Mechanismus an eine globale Zeit des gesamten verteilten sicherheitsrelevanten Systems synchronisiert. Der Kommunikationscontroller S_1 muss den Mechanismus der Frage-Antwort-Kommunikation umsetzen und die dafür notwendigen Konfigurationsdaten zur Verfügung haben bzw. Schnittstellen an den Prozessrechner Pro_1 und an die Freigabeschaltung FS_1 bereitstellen.

Der Kommunikationscontroller S_1 muss die Liste der Fragen und die Liste der richtigen Antworten in seinem permanenten Speicher programmiert haben. Hierzu eignet sich bspw. ein Flash-EPROM besonders gut, auf dem meistens auch weitere Konfigurationsdaten für die eigentliche Kommunikation gespeichert sind. Auch die Uhr (Timer) zum Aufsetzen der Timeouts für das zu überwachende Zeitfenster muss vorab konfiguriert werden. Bei Verwendung eines Fehlerzählers (Count) muss die obere Schranke (Limit) für diesen ebenfalls definiert werden.

Der Kommunikationscontroller S_1 bietet eine Hardware-Schnittstelle an, die eine Verdrahtung der resultierenden Abschaltlogik aus der Frage-Antwort-Kommunikation mit dem Prozessrechner Pro_1 (Signal A) und mit der zusätzlichen Freigabeschaltung FS_1 (Signal B) erlaubt.

Die Fragen und die Antworten werden über einen gemeinsamen Speicherbereich (Dual Port RAM) DPRAM_1 zwischen dem Prozessrechner Pro_1 und dem Kommunikationscontroller S_1 ausgetauscht. Dieser gemeinsame Speicherbereich DPRAM_1 bildet eine Software-Schnittstelle zwischen dem Kommunikationscontroller S_1 und dem Prozessrechner Pro_1. Von dem Kommunikationscontroller S_1 wird bspw. ein 16-bitWert in die Software-Schnittstelle eingestellt (Frage) und die Antwort innerhalb des Timeouts von der Software-Schnittstelle ausgelesen. Zusätzlich kann eine weitere Software-Schnittstelle in dem Kommunikationscontroller S_1 zur Verfügung stehen, um den Status der Frage-Antwort-Kommunikation nach außen zur Verfügung zu stellen (z. B. "Timeout überschritten" oder "Antwort in Ordnung").

Der Kommunikationscontroller S_1 muss die Auswertung der von dem Prozessrechner Pro_1 erhaltenen Antwort und einen Vergleich mit den in der Antwort-Liste gespeicherten Antworten durchführen. Hierzu sind in dem normalen Kommunikationsprotokoll zusätzliche Mechanismen zu berücksichtigen, die eine Adressierung der Tabelle, in der die Antwort-Liste abgelegt ist, und einen simplen Vergleich von zwei Werten ermöglicht. Außerdem können eventuell Fehlerzähler (Count) verwaltet werden.

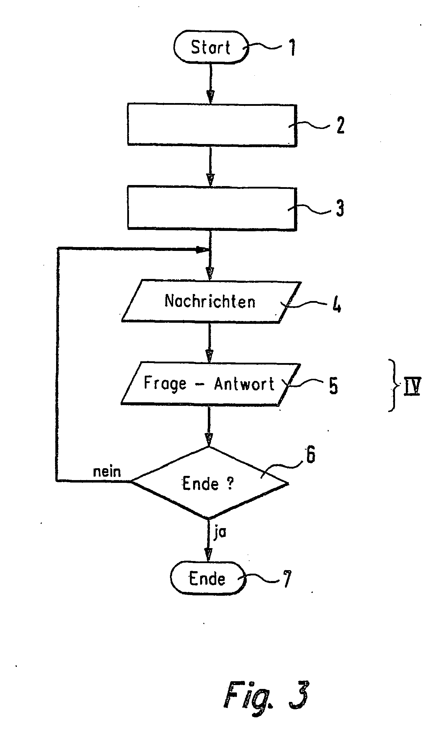

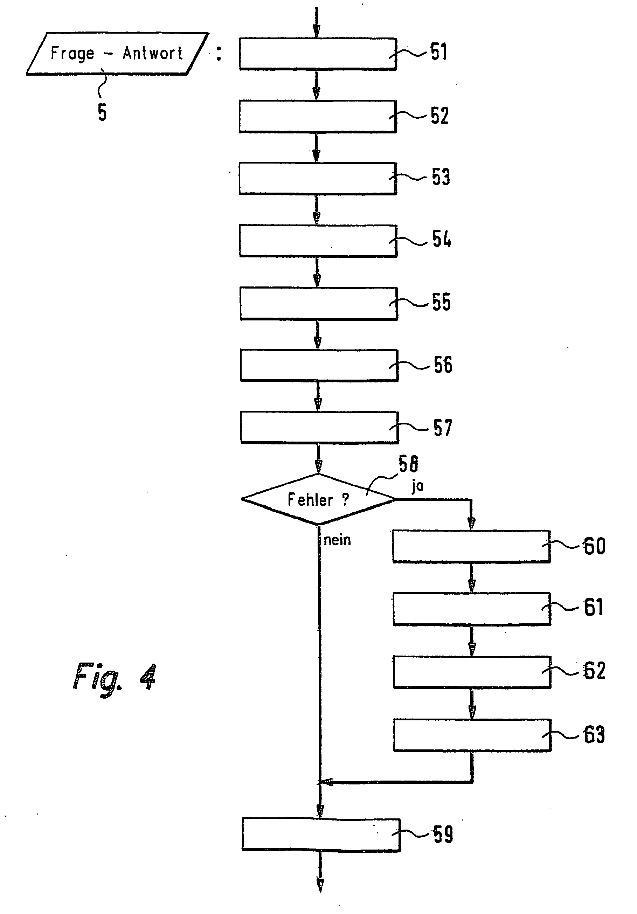

Nachfolgend wird das erfindungsgemäße Verfahren im Detail anhand der Fign. 3 und 4 erläutert. Das Verfahren beginnt in einem Funktionsblock 1. Die Ausgangssituation ist ein aktives verteiltes Netzwerk mit funktionierenden Teilnehmern (Kommunikationscontroller S_1, S_m und deren Prozessrechner Pro_1, Pro_m). Es liegt kein Signal zur Abschaltung des Prozessrechners Pro_1 oder der anzusteuernden Komponente Akt_1 (über die Freigabeschaltung FS_1) vor.

In einem Funktionsblock 2 wird ein Systemstart ausgeführt. Anschließend wird in einem Funktionsblock 3 eine Initialisierung des Kommunikationscontrollers S_1 und des Prozessrechners Pro_1 ausgeführt. Danach beginnt die normale Applikation mit Senden und Empfangen von Nachrichten (Funktionsblock 4). Zusätzlich initiiert der Kommunikationscontroller S_1 aber auch die Frage-Antwort-Kommunikation (Funktionsblock 5). Bei den beiden durch die Funktionsblöcke 4 und 5 nur symbolisch dargestellten Abläufen handelt es sich um Routinen, die nicht nur nacheinander, sondern auch nebeneinander, d. h. gleichzeitig oder quasi parallel, ausgeführt werden können. Die Frage-Antwort-Routine 5 ist in Fig. 4 im Detail dargestellt und wird unten näher beschrieben.

In einem Abfrageblock 6 wird dann überprüft, ob das Verfahren beendet werden soll oder nicht. Das Verfahren wird bspw. dann beendet, wenn der entsprechende Teilnehmer oder das gesamte verteilte System heruntergefahren werden. Falls das Verfahren nicht beendet werden soll, wird wieder zu dem Funktionsblock 4 verzweigt. Anderenfalls wird das erfindungsgemäße Verfahren in einem Funktionsblock 7 beendet.

In Fig. 4 ist die Frage-Antwort-Routine aus dem Funktionsblick 5 näher beschrieben. In einem Funktionsblock 51 wird eine bestimmte Frage aus dem in dem Speicherelement EPROM der Kommunikationsschnittstelle S_1 abgelegten Fragenkatalogs ausgewählt. Die Auswahl einer Frage kann eine zyklische Abarbeitung des Fragenkatalogs oder aber eine Abarbeitung nach einem vorgebbaren Muster oder nach einem Zufallsverfahren (z. B. gekoppelt an die aktuelle Systemzeit des Kommunikationscontrollers S_1) sein. Danach wird dem Prozessrechner Pro_1 in einem Funktionsblock 52 die ausgewählte Frage über die Software-Schnittstelle DPRAM_1 bereitgestellt und in einem Funktionsblock 53 der Zeitzähler (Timer) gestartet. Die Überwachung des Zeitfensters ist Teil des weiteren Protokollablaufs in dem Kommunikationscontroller S_1 und kann ebenfalls unterschiedlich gelöst sein, z. B. durch sog. Polling oder durch eine sog. Capture-and-Compare-Logik in dem Kommunikationscontroller S_1.

In dem Prozessrechner Pro_1 ist eine geeignete Software vorhanden, welche die Frage des Kommunikationscontrollers S_1 bearbeitet (Funktionsblock 54) und eine entsprechende Antwort auf die Frage ermittelt (Funktionsblock 55). Die hierzu eingesetzten Algorithmen bzw. Verfahren sind nicht Gegenstand dieser Erfindung und können von einer simplen Invertierung der Frage bis hin zu einer komplexen Berechnung inklusive eines Speichertests reichen. Die Software in dem Prozessrechner Pro_1 übergibt die Antwort dann in einem Funktionsblock 56 über die Software-Schnittstelle DPRAM_1 an den Kommunikationscontroller S_1.

In einem Funktionsblock 57 wird die Antwort dann aus der Software-Schnittstelle DPRAM_1 in den Kommunikationscontroller S_1 eingelesen. In einem Funktionsblock 58 wird ein Vergleich der Antwort des Prozessrechners Pro_1 mit der in der Antwort-Liste eingetragenen richtigen Antwort über eine Auswertelogik des Kommunikationscontrollers S_1 ausgeführt. Im Normalfall erhält der Kommunikationscontroller S_1 die richtige Antwort (Ausgang "nein"). Das Ergebnis der Frage-Antwort-Kommunikation wird zusätzlich in einem Statusregister eingestellt (Funktionsblock 59); in diesem Fall also ein positiver Status. Von hier aus verzweigt die Frage-Antwort-Routine 5 wieder zu dem Funktionsblock 6 in Fig. 3. Die nächste Frage kann dann an den Prozessrechner Pro_1, z. B. nach Ablauf des Timeouts, gestellt werden und die Frage-Antwort-Routine 5 wird erneut durchlaufen. Dadurch ergibt sich ein zyklisches Frage-Antwort-Protokoll. Die Initiierung der nächsten Frage kann aber auch zu vorab festgelegten Zeitpunkten erfolgen (vgl. hierzu auch zeitgesteuerte Kommunikationsprotokolle, die jeden Protokollschritt vom Erreichen eines bestimmten Zeitpunktes abhängig machen).

Im Falle eines Fehlers (Ausgang "ja" aus Abfrageblock 58) stimmt die Antwort des Prozessrechners Pro_1 nicht mit der entsprechenden richtigen Antwort auf die Frage in der konfigurierten Liste des Kommunikationscontrollers S_1 überein oder wurde das definierte Zeitfenster nicht eingehalten.

Im Rahmen der Fehlerbehandlung wird zunächst ein Fehlerzähler erhöht (Funktionsblock 60). Anschließend wird in einem Funktionsblock 61 das Signal A zum Abschalten des Prozessors Pro_1 ausgelöst. Ebenso kann in einem Funktionsblock 62 das Signal B zum Abschalten der Aktorik Akt_1 über die Freigabeschaltung FS_1 ausgesandt werden. Die Schritte 61 und 62 können bei jeder Fehlerbehandlung abgearbeitet werden. Alternativ können sie jedoch auch erst abgearbeitet werden, wenn der Fehlerzähler, der in dem Funktionsblock 60 erhöht wurde, einen vorgebbaren Grenzwert überschritten hat. Durch die Schritte 61 und 62 wird die Teilnahme der abgeschalteten Einheiten Pro_1, Akt_1 an der Kommunikation eingestellt, bis ein geordneter System-Neustart erfolgt. In einem Funktionsblock 63 wird das Ende des erfindungsgemäßen Verfahrens vorgegeben, so dass das Verfahren beim nächsten Durchlauf des Abfrageblocks 6 in dem Funktionsblock 7 beendet wird.

## Patentansprüche

1. Verfahren zur Ansteuerung einer Komponente (Akt_1) eines verteilten sicherheitsrelevanten Systems, insbesondere einer Komponente (Akt_1) eines X-by-Wire-Systems in einem Kraftfahrzeug, wobei die Komponente (Akt_1) von einem der Komponente (Akt_1) zugeordneten Prozessrechner (Pro_1) angesteuert wird, der über einen Kommunikationscontroller (S_1) an ein Kommunikationssystem (K_1) angeschlossen ist, **dadurch gekennzeichnet dass** unabhängig von dem Prozessrechner (Pro_1) der Prozessrechner (Pro_1) von dem Kommunikationscontroller (S_1) überwacht wird.

2. Verfahren nach Anspruch 1, **dadurch gekennzeichnet, dass** dem Kommunikationscontroller (S_1) eine Liste mit Fragen zur Verfügung steht, die dem zu überwachenden Prozessrechner (Pro_1) zu vorgebbaren Zeitpunkten gestellt werden, wobei der Prozessrechner (Pro_1) dem Kommunikationscontroller (S_1) eine Antwort gibt, die von diesem dann ausgewertet wird.

3. Verfahren nach Anspruch 2, **dadurch gekennzeichnet, dass** die Antwort dahingehend überprüft wird, ob sie innerhalb einer vorgebbaren Zeitdauer erfolgte.

4. Verfahren nach Anspruch 2, **dadurch gekennzeichnet, dass** die Antwort dahingehend überprüft wird, ob sie richtig ist.

5. Verfahren nach Anspruch 4, **dadurch gekennzeichnet, dass** die Antwort dahingehend überprüft wird, ob sie in einer Liste als richtige Antwort auf die gestellte Frage eingetragen ist.

6. Verfahren nach einem der Ansprüche 2 bis 5, **dadurch gekennzeichnet, dass** dem Prozessrechner die Fragen periodisch von dem Kommunikationscontroller gestellt werden.

7. Verfahren nach einem der Ansprüche 1 bis 6, **dadurch gekennzeichnet, dass** der Kommunikationscontroller die Abschaltung des Prozessrechners übernimmt, falls die Antwort falsch ist und/ oder nicht innerhalb einer vorgebbaren Zeitdauer erfolgte.

8. Verfahren nach einem der Ansprüche 1 bis 6, **dadurch gekennzeichnet, dass** der Kommunikationscontroller die Abschaltung der anzusteuernden Komponente übernimmt, falls die Antwort falsch ist und/ oder nicht innerhalb einer vorgebbaren Zeitdauer erfolgte.

9. Kommunikationscontroller zum Anschluss eines Prozessrechners (Pro_1) an ein Kommunikationssystem (K_1), wobei der Prozessrechner zur Ansteuerung einer Komponente eines verteilten, sicherheitsrelevanten Systems, insbesondere einer Komponente eines X-by-Wire-Systems in einem Kraftfahrzeug dient, und auf dem Kommunikationscontroller (S_1) zur Realisierung einer Datenübertragung zwischen dem Prozessrechner (Pro_1) und dem Kommunikationssystem (K_1) ein Kommunikationsprotokoll abläuft, **dadurch gekennzeichnet, dass** das Kommunikationsprotokoll um Mechanismen ergänzt ist, die es dem Kommunikationscontroller (S_1) ermöglichen, den Prozessrechner (Pro_1) zu überwachen.

10. Kommunikationscontroller (S_1) nach Anspruch 9, **dadurch gekennzeichnet, dass** das Kommunikationsprotokoll um Mechanismen zur Ausführung eines Verfahrens nach einem der Ansprüche 2 bis 8 ergänzt ist.

11. Kommunikationscontroller (S_1) nach Anspruch 8 oder 9, **dadurch gekennzeichnet, dass** der Kommunikationscontroller ein Speicherelement, insbesondere ein Random-Access-Memory, ein Read-Only-Memory oder ein Flash-Memory, aufweist, auf dem Fragen für den Prozessrechner und richtige Antworten für eine Frage-Antwort-Kommunikation mit dem Prozessrechner abgespeichert sind.

## Claims

1. Method for controlling a component (Akt_1) of a distributed safety-relevant system, in particular a component (Akt_1) of an X-by-wire system in a motor vehicle, wherein the component (Akt_1) is controlled by a process computer (Pro_1) which is assigned to the component (Akt_1) and is connected via a communication controller (S_1) to a communication system (K_1), **characterized in that** the process computer (Pro_1) is monitored by the communication controller (S_1) independently of the process computer (Pro_1).

2. Method according to Claim 1, **characterized in that** a list with enquiries which are presented at predefinable times to the process computer (Pro_1) to be monitored is made available to the communication controller (S_1), wherein the process computer (Pro_1) sends a response to the communication controller (S_1), which response is then evaluated by the latter.

3. Method according to Claim 2, **characterized in that** the response is checked to determine whether it takes place within a predefinable time period.

4. Method according to Claim 2, **characterized in that** the response is checked to determine whether it is correct.

5. Method according to Claim 4, **characterized in that** the response is checked to determine whether it is entered into a list as a correct response to the enquiry presented.

6. Method according to one of Claims 2 to 5, **characterized in that** the enquiries are presented periodically by the communication controller to the process computer.

7. Method according to one of Claims 1 to 6, **characterized in that** the communication controller performs the switching off of the process computer if the response is incorrect and/or did not take place within a predefinable time period.

8. Method according to one of Claims 1 to 6, **characterized in that** the communication controller performs the switching off of the component which is to be actuated if the response is incorrect and/or did not take place within a predefinable time period.

9. Communication controller for connecting a process computer (Pro_1) to a communication system (K_1), wherein the process computer serves to actuate a component of a distributed safety-relevant system, in particular a component of an X-by-wire system in a motor vehicle, and a communication protocol runs on the communication controller (S_1) for carrying out a data transmission between the process computer (Pro_1) and the communication system (K_1), **characterized in that** the communication protocol additionally has mechanisms which permit the communication controller (S_1) to monitor the process computer (Pro_1).

10. Communication controller (S_1) according to Claim 9, **characterized in that** the communication protocol additionally has mechanisms for carrying out a method according to one of Claims 2 to 8.

11. Communication controller (S_1) according to Claim 8 or 9, **characterized in that** the communication controller has a memory element, in particular a random access memory, a read-only memory or a flash memory on which enquiries for the process computer and correct responses for an enquiry/response communication with the process computer are stored.

## Revendications

1. Procédé de commande d'un composant (Akt_1) d'un système distribué en rapport avec la sécurité, notamment un composant (Akt_1) d'un système tout électrique (X-by-wire) dans un véhicule automobile, le composant (Akt_1) étant commandé par un calculateur de processus (Pro_1) associé au composant (Akt_1), lequel est connecté à un système de communication (K_1) par le biais d'un contrôleur de communication (S_1), **caractérisé en ce que** le calculateur de processus (Pro_1) est surveillé par le contrôleur de communication (S_1) indépendamment du calculateur de processus (Pro_1).

2. Procédé selon la revendication 1, **caractérisé en ce que** le contrôleur de communication (S_1) a à sa disposition une liste de questions qui sont posées au calculateur de processus (Pro_1) à surveiller à des instants à prédéfinir, le calculateur de processus (Pro_1) donnant au contrôleur de communication (S_1) une réponse qui est ensuite interprétée par celui-ci.

3. Procédé selon la revendication 1, **caractérisé en ce qu'**il est vérifié si la réponse a eu lieu pendant une durée à prédéfinir.

4. Procédé selon la revendication 2, **caractérisé en ce qu'**il est vérifié si la réponse est correcte.

5. Procédé selon la revendication 4, **caractérisé en ce qu'**il est vérifié si la réponse est inscrite dans une liste en tant que réponse correcte à la question posée.

6. Procédé selon l'une des revendications 2 à 5, **caractérisé en ce que** les questions sont posées périodiquement au calculateur de processus par le contrôleur de communication.

7. Procédé selon l'une des revendications 1 à 6, **caractérisé en ce que** le contrôleur de communication prend en charge la mise hors circuit du calculateur de processus si la réponse est fausse et/ou n'a pas eu lieu pendant une durée à prédéfinir.

8. Procédé selon l'une des revendications 1 à 6, **caractérisé en ce que** le contrôleur de communication prend en charge la mise hors circuit du composant à commander si la réponse est fausse et/ou n'a pas eu lieu pendant une durée à prédéfinir.

9. Contrôleur de communication destiné à connecter un calculateur de processus (Pro_1) à un système de communication (K_1), le calculateur de processus servant à commander un composant d'un système distribué en rapport avec la sécurité, notamment un composant d'un système tout électrique (X-by-wire) dans un véhicule automobile, et un protocole de communication étant exécuté sur le contrôleur de communication (S_1) en vue de réaliser une transmission de données entre le calculateur de processus (Pro_1) et le système de communication (K_1), **caractérisé en ce que** le protocole de communication est complété par des mécanismes qui permettent au contrôleur de communication (S_1) de surveiller le calculateur de processus (Pro_1).

10. Contrôleur de communication (S_1) selon la revendication 9, **caractérisé en ce que** le protocole de communication est complété par des mécanismes pour mettre en oeuvre un procédé selon l'une des revendications 2 à 8.

11. Contrôleur de communication (S_1) selon la revendication 8 ou 9, **caractérisé en ce que** le contrôleur de communication présente un élément de mémoire, notamment une mémoire vive (RAM), une mémoire morte (ROM) ou une mémoire flash sur laquelle sont mémorisées les questions pour le calculateur de processus et les réponses correctes pour une communication question/réponse avec le calculateur de processus.
